# EUROPEAN PATENT APPLICATION

(11) **EP 1 519 620 A2**
(43) Date of publication of application: **30.03.2005**
(21) Application number: 04006454.5
(22) Date of filing: 17.03.2004
(51) Int. Cl.: H04R 5/033, H04R 1/10

(54) **Digital audio player**

(30) Priority: 27.09.2003 KR 2003067205
(71) Applicant: Nextway Co., Ltd., Seoul 135-090 (KR)
(72) Inventor: Bum, Jae-Ryong, Kangnam-gu Seoul 135-090 (KR)
(74) Representative: Weber, Joachim, Dr.

(57) **Abstract**

The present invention relates to a digital audio player with improved user-friendliness through increased compactness and wearability, and more particularly, to a digital audio player wherein its main module alone can be used as a digital audio player and can also be readily operated as a headset-type digital audio player by dividing the main module into two sections and combining the divided sections of the main module with a headset module at both sides of the headset module, respectively. According to the present invention, there is an advantage in that the user can simply select either a stand-alone or headset style for the digital audio player according to the user's preference.

## Description

### BACKGROUND OF THE INVENTION

### 1. Field of the Invention

The present invention relates to a digital audio player with improved user-friendliness through increased compactness and wearability, and more particularly, to a digital audio player wherein its main module alone can be used as a digital audio player and can also be readily operated as a headset-type digital audio player by dividing the main module into two sections and combining the divided sections of the main module with a headset module at both sides of the headset module, respectively.

### 2. Description of the Related Art

Conventionally, a variety of digital audio players including MP3 players have been manufactured and marketed. It is important to improve user-friendliness of such digital audio players. Particularly, as the leisure sports become popular, a certain type of digital audio player has emerged which may be used during a leisure sports activity such as climbing or exercise. A headset type of MP3 player is representative o f such a digital audio player for leisure sports. However, this digital audio player for leisure sports has not been widely used because of its lack of user-friendliness during normal use.

### SUMMARY OF THE INVENTION

Accordingly, the present invention is conceived to solve the aforementioned problems. An object of the present invention is to provide a digital audio player with improved compactness and wearabililty by allowing a user to select either stand-alone style or headset style according to user's preference.

### BRIEF DESCRIPTION OF THE DRAWINGS

The above and other objects, features and advantages of the present invention will become apparent from the following description of preferred embodiments in conjunction with the accompanying drawings, in which:
FIG. 1 is a conceptual view illustrating the external configuration of a main module of a digital audio player in accordance with the present invention;
FIG. 2 is a conceptual view illustrating the internal configuration of the main module of the digital audio player in accordance with the present invention; and
FIGS. 3a and 3b are conceptual views illustrating the entire configuration of the digital audio player in accordance with the present invention.

### DETAILED DESCRIPTION OF THE INVENTION

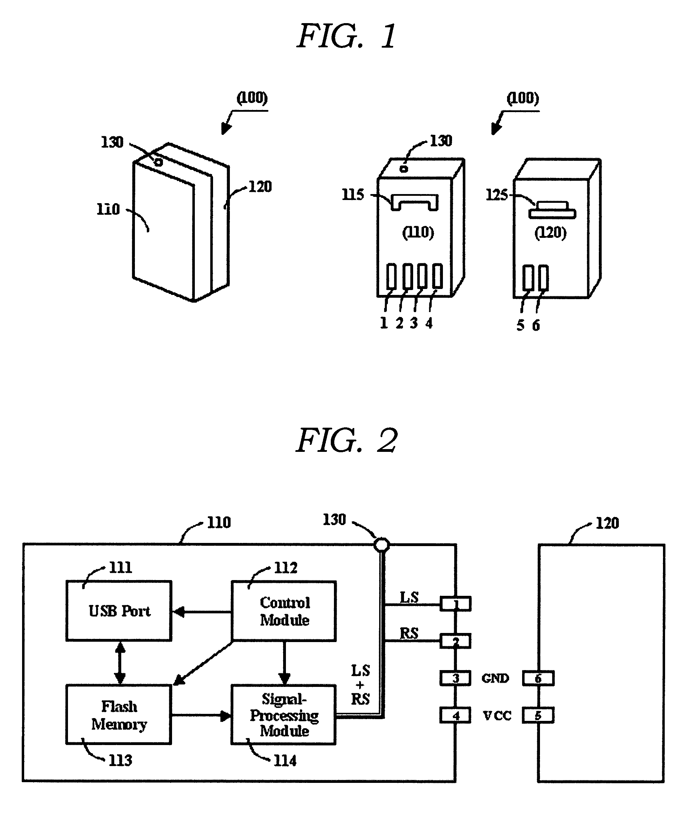

FIG. 1 is a view illustrating the external configuration of a main module 100 of a digital audio player in accordance with the present invention. The digital audio player of the present invention comprises a main module 100 and a headset module 200, as described later, and FIG. 1 illustrates the main module 100. The main module 100 may be used as a stand-alone digital audio player, as with common MP3 players, and comprises a system module 110 and a battery module 120, as shown in FIG. 1.

The main module 100 should be operable as a stand-alone unit and therefore may comprise a LCD display or input key matrix, etc. within the system module 110, for example, as with common MP3 players. Additionally, the above-described user interface may be implemented using a wired/wireless remote control. If a wired remote control is used, the remote control and an earphone may be connected in an integrated configuration via a sound jack 130, shown in FIG. 1. Since a sound jack is well known to those skilled in the art, detailed descriptions thereof will be omitted herein.

The system module 110 and the battery module 120 are provided with a first and second engagement means 115 and 125 and a series of interface terminals 1 to 6 for engagement with each other. When the system module 110 and the battery module 120 are engaged by way of the first and second engagement means 115 and 125, a first interface 3 and 4 that formed on the system module 110 and a third interface 5 and 6 that formed on the battery module 120 may be interconnected respectively to supply operating power from the battery module 120 to the system module 110. In the battery module 120, a rechargeable battery module may be embedded, or a disposable or a rechargeable battery may be interchangeably provided.

FIG. 2 is a conceptual view illustrating the internal configuration of a main module 100 constituting a digital audio player in accordance with the present invention. First, in the battery module 120, a rechargeable battery module may be embedded, or a disposable or a rechargeable battery may be interchangeably provided and therefore the operating power may be supplied to the system module 110. In order to accomplish this, the third interface 5 and 6 of the battery module 120 may comprise a first power terminal 6 corresponding to a ground voltage GND and a second power terminal 5 corresponding to a high-level voltage VCC, respectively.

In the meantime, the system module 110 may function as a common digital audio player, and, to this end, may comprise a flash memory 113 for storing digital audio data in a non-volatile way, a signal-processing module 114 for decoding digital audio signals to generate analog sound signals, a USB port 111 for receiving the digital audio data from a external computer system, and a control module 112 for controlling the entire system operation of the system module 110.

The flash memory 113 is presented as an example of a non-volatile memory module for storing digital audio data, but various non-volatile memory devices may be used, in addition to the flash memory device. Furthermore, the USB port 111 is presented as an example of a network terminal for receiving digital audio data from the exterior in a digital communications scheme, but any wired or wireless digital interface capable of receiving digital audio data from an external system may be used.

Analog sound signals LS and RS generated by a signal-processing module 114 are provided to a common sound jack 130 shown in FIG 1 and also to the above-described second interface 1 and 2. In FIGS. 1 and 2, two terminals 1 and 2 are used for analog sound signals, assuming that the sound is stereo. Such a configuration, however, is not essential in the present invention, so that the number of the terminals may be properly selected according to the digital audio decoding technique employed.

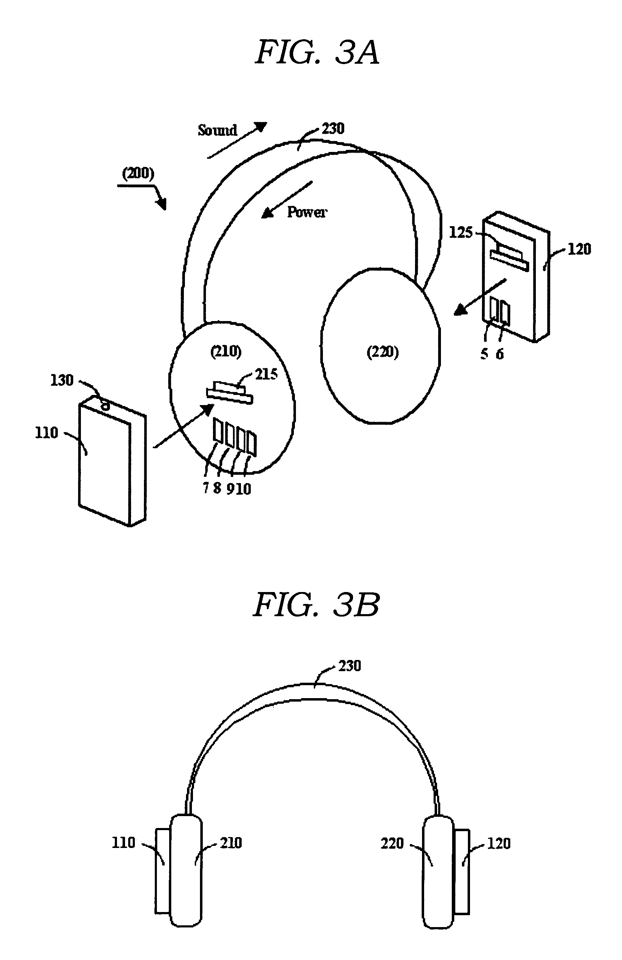

FIGS. 3a and 3b are conceptual views illustrating the entire configuration of the digital audio player in a ccordance with the present invention. As described above, the digital audio player of the present invention comprises a main module 100 and a headset module 200, the detailed description of the main module having previously been provided with reference to FIGS. 1 and 2. In FIG. 3a, the concept of the headset module 200 is illustrated in detail. As shown in this figure, the headset module 200 of the present invention comprises a first headset module 210, a second headset module 220, and a headset connecting member 230.

The first headset module 210 is intended to engage with the above-described system module 110, wherein a third engagement means 215 is provided on the first headset module 210 correspondingly to the first engagement means 115 of the system module 110, and a fourth interface 7 to 10 is provided on the first headset module 210 correspondingly to the first interface 3 and 4 and the second interface 1 and 2 of the system module 110. Accordingly, when the first headset module 210 and the system module 110 are engaged with each other by the first and third engagement means 115 and 215, operating power may be provided from the headset module 210 to the system module 110 through the first interface 3 and 4 and the fourth interface 7 and 8, and the analog sound signals LS and RS may be provided from the system module 110 to the first headset module 210 through the second interface 1 and 2 and the fourth interface 9 and 10.

In addition, the second headset module 220 is intended to engage with the aforementioned battery module 120, wherein a fourth engagement means, not shown, is provided on the second headset m odule 2 20 correspondingly to the second engagement means 125 of the battery module 120 and a fifth interface, not shown, is provided on the second headset module 220 correspondingly to the third interfaces 5 and 6 of the battery module 120. Accordingly, when the second headset module 220 and the battery module 120 are engaged with each other by the second engagement means 125 and the fourth engagement means, not shown, operating power may be supplied from the battery module 120 to the second headset module 220 through the third interface 5 and 6 and the fifth interface (not shown).

The first and second headset modules 210 and 220 may further comprise first and second speakers for performing the functionality of the corresponding right and left speaker modules of a common headset device. The first and second headset modules 210 and 220 can generate sound based on the analog sound signal received from the system module 110 through the second interface 1 and 2 and the fourth interface 9 and 10 and may be implemented as such in a variety of ways. For example, when only mono sound is supported, the first and second headset module 210 and 220 may be implemented to generate sound using the same mono sound signal, and, when stereo sound is further supported, the first and second headset modules 210 and 220 may be implemented to generate sound using separate analog sound signals, for example, the left sound signal LS for the first headset module 210 and the right sound signal RS for the second headset module 220.

Further, the headset connecting member 230 may function to physically couple the first and second headsets 210 and 220. As shown in these figures, the headset connecting member may be formed in a common type of headphone, in a type of back-phone or in such a flexible type that the first and second headset modules 210 and 220 are properly plugged into the ears to provide simple connection therebetween. However, this is not intended to limit the specific configuration of the headset connecting member of the present invention.

The headset connecting member 230 may electrically connect the first and second headset modules 210 and 220 to supply operating power from the second headset 220 to the first headset 210 and analog sound signal (for example, RS) from the first headset module 210 to the second headset module 220. Specifically, when the main module 100 is coupled to the headset module 200, operating power will be supplied to the system module 110 from the battery module 120 through the second headset module 220, the headset connecting member 230 and the first headset module 210, and the analog sound signal will be supplied to the second headset module 220 from the system module 110 through the first headset module 210 and the headset connecting member 230. Further, the analog sound signal may be supplied to the first headset module 210 as well as the second headset module 220.

According to the present invention, the second engagement means 125 formed on the battery module 120 and the third engagement means 215 formed on the first headset module 210 are not compatible, and therefore it is not possible to confuse the system module 110 with the battery module 120. However, depending on how the engagement means is implemented, the system module 110 may be engaged with the second headset module 220 and the battery module 120 with the first headset module 210 by the user contrary to the design intention of the digital audio player.

In such a case, if the terminals associated with the operating power would be arranged in a symmetric fashion, the ground voltage terminal GND and the high-level voltage terminal VCC of the battery module 120 may be connected to the high-level voltage terminal VCC and the ground voltage terminal GND of the system module 110 and therefore a failure may occur in the system module 110, which is undesirable.

In addition, when the digital audio player of the present invention is employed in a headset configuration, as shown in FIG 3a, it will be convenient for a user to enter device control commands through a wireless remote control. Therefore, it is preferred that a separate wireless remote control may be provided in the present invention. To this end, it is desirable that the system module 110 may further comprise a wireless communications unit, not shown, to receive control commands from the wireless remote control in a wireless communications scheme and transfer them to the control m odule 112. In this context, applicable wireless communications schemes include an infrared communications scheme, being appropriate in terms of costs, and high-grade wireless communications schemes, such as a wireless LAN or Bluetooth, may be applied.

According to the digital audio player of the present invention, its main module alone can be used as a digital audio player and can also be readily operated as a headset-type digital audio player by dividing the main module into two sections and combining the divided sections of the main module with a headset module at both sides of the headset module, respectively. Therefore, there is an advantage in that the user can simply select either a stand-alone or headset style for a digital audio player according to the user's preference.

Although the present invention has been described in connection with the embodiments illustrated in the drawings, it is merely for illustrative purposes. It will be understood by those skilled in the art that various modifications and other equivalents thereof may be made thereto. Therefore, the technical spirit and scope of the present invention should be defined by the appended claims.

## Claims

1. A digital audio player, comprising:
a main module (100) and a headset module (200) connectable with the main module,
wherein the main module (100) comprises:
a system module (110) that includes a first engagement means (115) enabling engagement with the exterior and a first particular interface (3, 4) through which power is supplied from the exterior, and generates analog sound signals by decoding digital audio data and subsequently supplying the analog sound signals to a common sound jack (130) and a second particular interface (1, 2); and
a battery module (120) that includes a second engagement means (125) with which the first engagement means in the system module is engaged and a third interface (5, 6) from which power is supplied to the system module through the first interface, and
wherein the headset module (200) comprises:
a first headset module (210) that includes a third engagement means (215) with which the first engagement means in the system module is engaged, a fourth interface (7, 8, 9, 10) to which the first and second interfaces are connected upon engagement with the system module, and a first speaker for outputting sound from the analog sound signal delivered through the fourth interface;
a second headset module (220) that includes a fourth engagement means with which the second engagement means in the battery module is engaged, a fifth interface to which the third interface is connected upon engagement with the battery module, and a second speaker for outputting sound from the analog sound signal delivered from the first headset module; and
a headset connecting member (230) which connects the first headset module and the second headset module, transfers the analog sound signal from the first headset module to the second headset module, and supplies the fourth interface in the first headset module with operating power provided to the second headset module through the fifth interface.

2. The digital audio player as claimed in claim 1, wherein the analog sound signal generated by the system module (110) comprises a first sound signal (LS) and a second signal (RS); the second interface comprises a first terminal (1) for transmitting the first sound signal and a second terminal (2) for transmitting the second sound signal, and the fourth interface comprises a third terminal (10) corresponding to the first terminal and a fourth terminal (9) corresponding to the second terminal; and the first headset module (210) outputs the first sound signal transferred by the third terminal through the first speaker, the headset connecting member (230) supplies the second sound signal transferred by the fourth terminal (9) to the second headset module, and the second headset module (220) outputs the second sound signal delivered by the headset connecting member through the second speaker.

3. The digital audio player as claimed in claim 1, wherein the third interface comprises a first power terminal (6) corresponding to ground voltage (GND) and a second power terminal (5) corresponding to high-level voltage (VCC) in such a way that the first power terminal and the second power terminal are arranged asymmetrically within the battery module (120).

4. The digital audio player as claimed in claim 1, wherein the system module (110) comprises:
a non-volatile memory unit (113) for storing the digital audio data in a non-volatile way;
a signal-processing module unit (114) for generating the analog sound signal by decoding the digital audio data;
a digital interface unit (111) for receiving the digital audio data from the exterior in a wired/wireless digital communication scheme; and
a control module unit (112) for controlling the operation of the system module.

5. The digital audio player as claimed in claim 4, wherein the system module (110) further comprises a wireless communication unit for receiving a control command in a wireless communication scheme from a external remote control and providing the received command to the control module (112).
